# FASCICULE DE BREVET EUROPEEN

(11) **EP 1 959 322 B1**
(45) Date de publication et mention de la délivrance du brevet: **20.01.2010**
(21) Numéro de dépôt: 08002518.2
(22) Date de dépôt: 12.02.2008
(51) Int. Cl.: G05B 19/39

(54) **Vérin électrique de commande de vol pour aéronef**
Elektrischer Stellantrieb zur Flugsteuerung eines Flugzeugs
Aircraft flight control electro-actuator

(30) Priorité: 14.02.2007 FR 0701086
(43) Date de publication de la demande: 20.08.2008
(73) Titulaire: EUROCOPTER, 13725 Marignane Cédex (FR)
(72) Inventeur: Honnorat, Olivier, 13090 Aix en Provence (FR); Kirchhofer, Alain, 13300 Salon de Provence (FR)
(74) Mandataire: GPI & Associés

(56) Documents cités:
- EP-A- 0 658 832
- GB-A- 2 094 740

## Description

La présente invention est relative à un vérin électrique asservi de commande de vol pour aéronef,

Un tel vérin permet de commander une variation de la position d'une surface (ou organe) aérodynamique telle qu'une pale de rotor d'hélicoptère ou un aileron d'aéronef, en fonction d'un signal de consigne de position pour cette surface qui peut être délivré par un calculateur embarqué de commande de vol.

L'invention s'applique en particulier à une servocommande électrique comportant un moteur électrique rotatif entraînant un organe mécanique en translation par l'intermédiaire d'un réducteur de vitesse de type vis/écrou.

L'invention s'applique notamment à un vérin mécaniquement placé en série, i.e. intercalé, entre un organe de commande de vol susceptible d'être actionné par un pilote et la surface aérodynamique dont la position doit être ajustée.

L'utilisation d'un tel vérin, dit « vérin série », est notamment décrite dans le brevet US-4,492,907 où un circuit d'asservissement du vérin en position comporte un circuit de contrôle de la position de l'organe entraîné par le servomoteur, qui peut notamment être mesurée par l'intermédiaire d'un potentiomètre.

Il a par ailleurs été décrit dans le brevet US-5,204,605 un tel vérin dans lequel la position du vérin est calculée en fonction de signaux délivrés par des capteurs à effet Hall sensibles à la position du rotor du moteur du vérin, et dans lequel la position correspondant au point milieu (i,e la demi-course) du vérin est détectée par un autre capteur à effet Hall.

Il a par ailleurs été décrit dans la demande de brevet GB-A-2 094 740 un vérin comportant: un moteur électrique rotatif, une vis entraînée en rotation par la rotation du moteur, un organe mécanique entraîné en translation par la rotation de la vis, un premier capteur de position sensible à une position du moteur électrique rotatif et/ou de la vis, un second capteur de position sensible à une position de l'organe mécanique et un circuit d'asservissement connecté aux deux capteurs de position et au moteur.

La fiabilité des systèmes embarqués à bord d'aéronef étant critique, il a également été proposé dans le brevet US-4,434,389, un servomoteur de gouverne d'aéronef dont le stator du moteur comporte des bobinages redondants et des jeux de capteurs de position (à effet Hall) indépendants.

Un objectif de l'invention est de proposer un vérin (ou servomoteur) « linéaire » asservi en position dont la fiabilité soit augmentée.

Un objectif de l'invention est de proposer un tel vérin ou servomoteur qui soit amélioré et/ou qui remédie, en partie au moins, aux lacunes ou inconvénients des vérins et servomoteurs de commande de vol connus.

L'invention s'applique donc à un vérin ou servomoteur comportant :
- un moteur électrique rotatif,
- une vis arrangée pour être entraînée en rotation par la rotation du moteur,
- un organe mécanique (parfois dit « éctou») arrangé pour être entraîné en translation par la rotation de la vis,
- un premier capteur de position sensible à au moins une position (en rotation) du moteur électrique rotatif et/ou de la vis,
- un second capteur de position sensible à au moins une position (en translation) de l'organe mécanique, et
- un circuit d'asservissement connecté aux deux capteurs de position et au moteur, ce circuit délivrant un signal d'alimentation du moteur qui varie en fonction d'un signal de consigne de position appliqué au circuit d'asservissement et en fonction des signaux délivrée par les deux capteurs de position.

Conformément à un aspect de l'invention, le second capteur de position présente une résolution au moins (sensiblement) équivalente à, par exemple -voisine de-, la résolution du premier capteur de position, de sorte que ces deux capteurs présentent une redondance (dissymétrique), et le circuit d'asservissement comporte des (au moins deux) modules redondants de calcul de la position de l'organe mécanique en fonction des signaux/données délivré(e)s par les deux capteurs, ainsi qu'au moins deux modules de surveillance mutuelle des résultats délivrés par les modules de calcul.

Grâce à l'invention, lorsque l'un au moins des modules de surveillance des résultats de calcul de position détecte une différence significative entre les résultats respectivement délivrés par le premier module de calcul et par le second module de calcul, le(s) module(s) de surveillance peut(vent) délivrer un signal de détection de défaut ; ce signal peut être exploité en commandant l'arrêt du servomoteur à sa position courante ou à une autre position.

Au sens de la présente demande, la résolution du second capteur est au moins équivalente à celle du premier capteur lorsque le nombre de points/données/impulsions de mesure délivré(e)s par le second capteur lorsque l'organe mécanique est déplacé sur toute la course du vérin, est sensiblement au moins égal au nombre de points/données/impulsions de mesure délivré(e)s par le premier capteur pour le même déplacement de l'organe mécanique, en particulier au moins égal au double de ce dernier nombre.

A titre d'exemple, si le moteur est équipé de deux capteurs de position à effet Hall délivrant chacun une impulsion par tour du rotor du moteur, si le pas de la via d'entraînement de l'organe mécanique est de un millimètre et si la course totale du vérin (i.e de l'organe mécanique) est de 10 millimètres, cette course correspond à 10 tours de moteur et par conséquent à 20 impulsions délivrées par les (premiers) capteurs à effet Hall ; dans ce cas on choisit un second capteur de position qui délivre 20 impulsions environ, en particulier au moins 20 impulsions environ, pour la course totale du vérin.

Il est particulièrement avantageux que la résolution du système de mesure -i,e le second capteur- de la position de l'organe mécanique de « sortie » du vérin soit supérieure à celle du système de mesure de position du rotor du moteur -i.e le premier capteur-,

Chacun de ces capteurs peut comporter un ou plusieurs éléments sensibles. Chacun des éléments sensibles du premier et du second capteurs de position peut délivrer en sortie un signal numérique ou un signal analogique,

Selon un mode préféré de réalisation, le premier capteur comporte plusieurs éléments sensibles délivrant chacun un signal numérique, tandis que le second capteur comporte un élément sensible délivrant un signal analogique, i.e. présentant une résolution « infinie ».

Ce dernier élément sensible peut notamment être un potentiomètre, en particulier un potentiomètre « sans contact », i,e, un potentiomètre sans contact direct entre un élément mobile (« curseur ») électriquement conducteur et un élément fixe (« piste ») également conducteur ; un tel potentiomètre peut comporter deux substrats fixé au corps du vérin, qui sont de préférence électriquement isolants, dont au moins un est déformable, les substrats étant allongés, disposés en regard mutuel et séparés par une lame d'un fluide électriquement isolant -tel que de l'air-.

Les faces en regard des deux substrats présentent au moins un revêtement électriquement conducteur et un curseur (conducteur ou non) mobile lié à 1' « écrou » du vérin est maintenu en appui « local » glissant sur la face externe du substrat déformable avec un effort suffisant pour provoquer un contact mutuel « local » des deux revêtements conducteurs ; un tel potentiomètre peut être tel que décrit dans le modèle d'utilité DE-9420887,

Selon un autre mode préféré de réalisation, le second capteur de position peut comporter un élément sensible à un champ magnétique, à sortie analogique ; cet élément peut être une magnétorésistance, en particulier une magnétorésistance anisotrope à base de matériaux(x) ferromagnétique (s) (alliages de fer et nickel notamment) déposé(s) en couche mince sur un substrat, ou un capteur à effet Hall analogique. De tels capteurs sont proposés par la société Honeywell (Etats-Unis d'Amérique) notamment.

Alternativement ou en complément, le second capteur de position peut comporter un élément sensible à sortie analogique de type optique, inductif, ou capacitif notamment.

Selon un mode préféré de réalisation, le second capteur de position comporte un élément sensible à sortie analogique ainsi qu'au moins un élément sensible à sortie numérique qui peut délivrer une impulsion correspondant à un point déterminé de la course du vérin, en particulier un point voisin d'une des deux extrémités de la course du vérin.

Lors du démarrage de l'aéronef et de son système de commandes de vol, un calculateur de l'aéronef commande généralement le positionnement de l'écrou du vérin dans une position de référence déterminée voisine du milieu de la course du vérin. Selon un mode préféré de mise en oeuvre du vérin, le déplacement vers cette position de référence est systématiquement réalisé dans un sens déterminé de déplacement de l'écrou - et de rotation du moteur - afin de s'affranchir de phénomènes d'hystérésis dans la mesure de position qui sont susceptibles d'être provoqués par le jeu mécanique de la transmission.

Lorsqu'un capteur (au moins) comporte un élément sensible délivrant un signal analogique, le circuit d'asservissement comporte au moins deux convertisseurs analogique/numérique ; chaque convertisseur a son entrée connectée à la sortie de l'élément sensible analogique et sa sortie connectée au module (respectif) de calcul de position.

Notamment lorsqu'un capteur comporte un potentiomètre, un capteur de température peut être intégré au vélin pour délivrer au module de calcul un signal (ou une donnée) représentative de la température mesurée, et le module de calcul comporte un module supplémentaire de compensation du signal de position délivré à partir du potentiomètre, afin de tenir compte de la dérive en température du potentiomètre ; alternativement ou en complément, un montage en pont de Wheatstone peut être utilisé.

Par ailleurs, le vérin peut comporter un capteur sensible à l'intensité absorbée pat le moteur, dont les signaux - le cas échéant numérisés - peuvent être utilisés par les modules de surveillance pour détecter une fin de course mécanique du vérin ou un défaut mécanique provoquant une surintensité du courant absorbé.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

Dans la présente demande, sauf indication explicite ou implicite contraire, les termes « signal » et « donnée » sont considérés comme équivalents.
La figure 1 est un schéma synoptique d'un vérin selon l'invention illustrant ses principaux composants selon un mode de réalisation.
Les figures 2 à 5 sont des chronogrammes des signaux délivrés par les éléments sensibles d'un premier capteur de position et d'un second capteur de position, selon différents modes de réalisation de l'invention ;

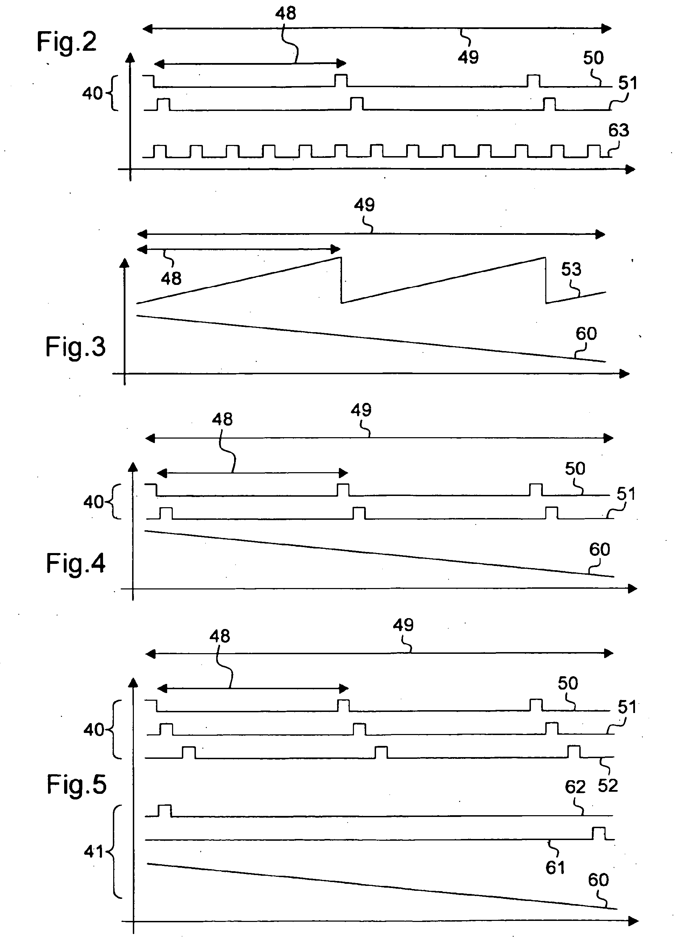

La figure 2 correspond à un premier capteur comportant deux éléments sensibles à sortie numérique, ainsi qu'à un second capteur comportant un seul élément sensible à sortie numérique ;
La figure 3 correspond à un premier capteur et à un second capteur à sorties analogiques ;
La figure 4 correspond à un premier capteur comportant deux éléments sensibles à sortie numérique, ainsi qu'à un second capteur comportant un seul élément sensible à sortie analogique ;
La figure 5 correspond à un premier capteur comportant trois éléments sensibles à sortie numérique, ainsi qu'à un second capteur comportant un élément sensible à sortie analogique ainsi que deux éléments sensibles à sortie numérique.

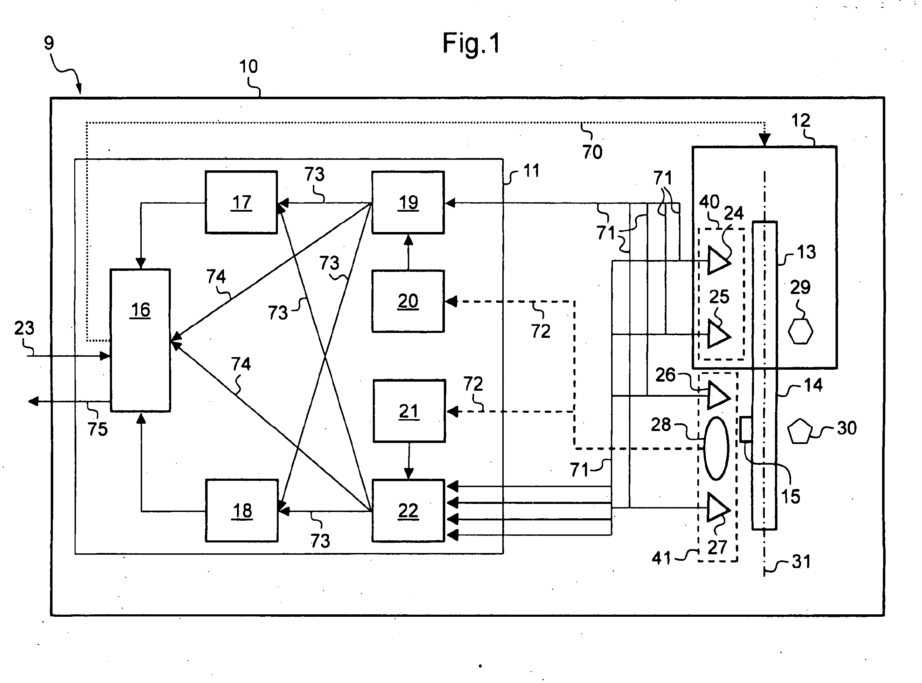

Par référence à la figure 1, le vérin 9 comporte un boîtier 10 recevant un moteur 12, une vis 14 entraînée par le moteur, un « écrou » 15 entraîné par la vis, ainsi qu'un circuit électronique 11 pour l'alimentation du moteur 12 et l'asservissement en position de l'écrou du vérin.

L'écrou 15 est relié à l'organe mécanique (non représenté) à entrainer en translation ; il peut donc s'étendre en partie à l'extérieur du boîtier 10.

Le moteur 12 comporte un rotor 13 solidaire en rotation de la vis 14, de sorte que le moteur 12 entraîne par son rotor 13 la vis 14 en rotation selon l'axe 31, et entraîne par conséquent l'« écrou » 15 en translation selon le même axe 31.

Le moteur 12 comporte en outre deux éléments 24, 25 formant un premier capteur 40 de position, qui sont sensibles à la position (en rotation) du rotor 13 et/ou de la vis 14, tels que des capteurs à effet Hall délivrant un signal numérique.

Le moteur 12 comporte également un capteur 29 - tel qu'un capteur inductif - qui est sensible à l'intensité du courant d'alimentation délivré par le circuit 11 au moteur 12 par la liaison 70.

Le vérin 9 comporte également trois éléments 26, 27, 28 qui sont (chacun) sensibles à la position (en translation) de 1'« écrou » 15 le long de l'axe 31 ; ces trois éléments forment un second capteur 41 de position, les éléments 26, 27 délivrant un signal numérique repéré 61, 62 figure 5, tandis que l'élément 28 délivre un signal analogique repéré 60 figures 3, 4 et 5.

Le circuit 11 comporte deux convertisseurs analogique/numérique 20, 21, deux circuits ou modules 19, 22 de calcul de la position de 1' « écrou » 15 le long de l'axe 31, deux circuits 17, 18 de contrôle des résultats de calcul délivrés par les modules 19, 22, ainsi qu'au moins un circuitou module16 de commande du moteur 12 et d'interface avec un calculateur (non représenté) de commande du vérin.

Chacun des éléments 24 à 27 sensibles à sottie numérique est relié à une entrée de chacun des deux circuits 19, 22 par une liaison 71 respective, et le capteur 28 est relié à une entrée de chacun des convertisseurs 20, 21 par une liaison 72.

La donnée de position délivrée par le capteur 28 et numérisée par le convertisseur 20 est délivrée en entrée du circuit 19, et la même donnée numérisée par le convertisseur 21 est délivrée en entrée du circuit 22. Chacun des modules 19, 22 détermine une donnée représentative de la position de l'« écrou » 15 en fonction des signaux/données délivrés par les deux capteurs de position : les signaux numériques sont intégrés et une comparaison avec les signaux, le cas échéant intégrés, des deux capteurs 40, 41 est effectuée; ces deux données de position calculée respectivement délivrées en sortie des modules 19, 22 sont appliquées en entrée de chacun des deux modules 17, 18, par l'intermédiaire de liaisons 73,

Lorsque un écart entre ces deux données de position calculée, respectivement déterminé par chacun des modules 17, 18, dépasse un seuil déterminé, le module correspondant délivre en sortie une donnée de détection d'erreur qui est adressée au module 16, pour transmission au calculateur (externe) de commande par l'intermédiaire d'une liaison 75,

Dans le cas contraire, les deux données de position calculée, qui sont délivrées au module 16 par les liaisons 74, sont combinées (« moyennées ») par ce module, et comparées à une donnée de consigne de position reçue en entrée du module 16 par une liaison 23 ; ce module élabore un signal de commande (et d'alimentation) du moteur en fonction du résultat de cette comparaison, et délivre ce signal de commande au moteur 12 par la liaison 70,

Les signaux ou données délivré(e)s par le capteur 29 d'intensité et un capteur 30 de température intégré au vérin, qui sont délivrés aux circuits de calcul 19, 22 par des liaisons - et le cas échéant par des convertisseurs analogique/numérique - non représenté(e)s, servent respectivement à détecter une défaillance mécanique et/ou l'arrivée en butée (fin de course) de l'écrou, et à compenser le cas échéant une dérive en température de l'un au moins des capteurs 24 à 28.

Par référence aux figures 2 à 5, l'axe des abscisses représente la position de l'écrou 15 le long de l'axe 31, la distance 49 représente la course du vérin, tandis que la distance 48 correspond à la partie de la course réalisée lorsque le rotor du moteur fait un tour complet,

Par référence à la figure 2, les signaux numériques 50, 51 respectivement délivrés par les deux éléments sensibles du premier capteur 40 comportent chacun une impulsion par tour de rotor ; le capteur 40 délivre ainsi six impulsions pour l'ensemble de la course du vérin ; ce nombre d'impulsions - et donc la résolution du capteur 40 - est inférieur au nombre d'impulsions (13 impulsions dans cet exemple) du signal 63 délivré par l'élément sensible du second capteur pour la course totale du vérin.

Dans le mode de réalisation correspondant à la figure 3, le premier capteur est constitué d'un seul élément sensible délivrant en sortie un signal 53 analogique, tel qu'un potentiomètre rotatif, et le second capteur est constitué d'un seul élément sensible délivrant en sottie un signal 60 analogique, tel qu'un potentiomètre linéaire ; la résolution des deux capteurs est alors « infinie ».

La figure 4 correspond à une configuration dans laquelle le premier capteur 40 comporte deux éléments à sortie 50, 51 numérique, comme sur la figure 2, tandis que le second capteur comporte un élément à sortie 60 analogique, comme aux figures 3 et 5.

La figure 5 correspond à une configuration dans laquelle le premier capteur 40 comporte trois éléments à sortie 50, 51, 52 numérique, tandis que le second capteur comporte un élément à sortie 60 analogique, ainsi que deux éléments à sortie 61, 62 numérique. Chacun de ces deux derniers éléments délivre une impulsion lorsque l'écxou/curseur 15 s'approche d'une des deux extrémités/butées de la course du vérin.

## Revendications

1. Vérin (9) comportant un moteur (12) électrique rotatif, une vis (14) arrangée pour être entraînée en rotation par la rotation du moteur, un organe (15) mécanique arrangé pour être entraîné en translation par la rotation de la vis, un premier capteur (40) de position sensible à au moins une position du moteur électrique rotatif et/ou de la vis, un second capteur (41) de position sensible à au moins une position de l'organe mécanique, et un circuit (11) d'asservissement connecté aux deux capteurs de position et au moteur, ce circuit délivrant un signal d'alimentation du moteur qui varie en fonction d'un signal (23) de consigne de position appliqué au circuit d'asservissement et en fonction des signaux délivrés par les deux capteurs de position,
le vérin étant **caractérisé en ce que** le second capteur de position présente une résolution supérieure à la résolution du premier capteur de position, de sorte que ces deux capteurs présentent une redondance, et le circuit d'asservissement comporte des modules (19, 22) redondants de calcul de la position de l'organe mécanique en fonction des signaux/données délivré(e)s par les deux capteurs, ainsi que des modules (17, 18) de surveillance mutuelle des résultats délivrés par les modules de calcul.

2. Vérin selon la revendication 1 dans lequel la résolution du système de mesure -i.e du second capteur- de la position de l'organe mécanique de « sortie » du vérin est sensiblement double à celle du système de mesure de position du rotor du moteur -i.e le premier capteur-.

3. Vérin selon la revendication 1 ou 2 dans lequel au moins un des premier et second capteurs comporte plusieurs éléments sensibles (24 à 28).

4. Vérin selon l'une quelconque des revendications 1 à 3 dans lequel le premier capteur (40) comporte plusieurs éléments sensibles (24, 25) délivrant chacun un signal numérique, tandis que le second capteur (41) comporte un élément sensible (28) délivrant un signal analogique, le circuit d'asservissement comportant au moins deux convertisseurs (20, 21) analogique/numérique, chaque convertisseur ayant son entrée connectée à la sortie de l'élément sensible analogique et sa sortie connectée à un des modules de calcul de position.

5. Vérin selon l'une quelconque des revendications 1 à 4 dans lequel le second capteur comporte un potentiomètre sans contact.

6. Vérin selon l'une quelconque des revendications 1 à 5 dans lequel le second capteur comporte un potentiomètre comportant deux substrats dont au moins un est déformable, les substrats étant allongés, disposés en regard mutuel et séparés par une lame d'un fluide électriquement isolant -tel que de l'air-, les faces en regard des deux substrats présentant au moins un revêtement électriquement conducteur.

7. Vérin selon l'une quelconque des revendications 1 à 6 dans lequel un organe (30) de compensation de température est intégré au vérin pour compenser une dérive en température d'un élément sensible.

8. Vérin selon l'une quelconque des revendications 1 à 7 dans lequel le second capteur comporte un élément sensible à un champ magnétique, à sortie analogique.

9. Vérin selon l'une quelconque des revendications 1 à 8 dans lequel le second capteur comporte une magnétorésistance anisotrope.

10. Vérin selon l'une quelconque des revendications 1 à 9 dans lequel le second capteur comporte un élément sensible à sortie analogique de type optique, inductif, ou capacitif.

11. Vérin selon l'une quelconque des revendications 1 à 10, dans lequel le second capteur de position comporte un élément sensible (28) à sortie analogique ainsi qu'au moins un élément sensible (26, 27) à sortie numérique qui peut délivrer une impulsion (61, 62) correspondant à un point déterminé de la course (49) du vérin, en particulier un point voisin d'une des deux extrémités de la course du vérin.

## Claims

1. An actuator (9) comprising a rotary electric motor (12), a screw (14) arranged to be driven in rotation by the rotation of the motor, a mechanical element (15) arranged to be driven in translation by the rotation of the screw, a first position sensor (40) which is sensitive to at least one position of the rotary electric motor and/or of the screw, a second position sensor (41) which is sensitive to at least one position of the mechanical element, and a servocontrol circuit (11) connected to the two position sensors and to the motor, this circuit supplying a power supply signal of the motor which varies as a function of a position set signal (23) applied to the servocontrol circuit and as a function of the signals supplied by the two position sensors,
the actuator being **characterised in that** the second position sensor has a resolution greater than the resolution of the first position sensor, such that these two sensors have a redundancy, and the servocontrol circuit comprises redundant modules (19, 22) for calculating the position of the mechanical element as a function of the signals/data supplied by the two sensors, and also modules (17, 18) for mutual monitoring of the results supplied by the calculation modules.

2. An actuator according to Claim 1, in which the resolution of the measurement system - i.e. of the second sensor - for the position of the "output" mechanical element of the actuator is substantially double that of the measurement system for the position of the rotor of the motor - i.e. the first sensor.

3. An actuator according to Claim 1 or 2, in which at least one of the first and second sensors comprises a plurality of sensitive elements (24 to 28).

4. An actuator according to any one of Claims 1 to 3, in which the first sensor (40) comprises a plurality of sensitive elements (24, 25) each supplying a digital signal, whereas the second sensor (41) comprises a sensitive element (28) which supplies an analogue signal, the servocontrol circuit comprising at least two analogue/digital converters (20, 21), each converter having its input connected to the output of the analogue sensitive element and its output connected to one of the position calculation modules.

5. An actuator according to any one of Claims 1 to 4, in which the second sensor comprises a contact-less potentiometer.

6. An actuator according to any one of Claims 1 to 5, in which the second sensor comprises a potentiometer comprising two substrates, at least one of which is deformable, the substrates being elongated, arranged facing one another and separated by a sheet of an electrically insulating fluid - such as air - the facing faces of the two substrates having at least one electrically conductive coating.

7. An actuator according to any one of Claims 1 to 6, in which a temperature compensation element (30) is integrated in the actuator in order to compensate for a temperature drift of a sensitive element.

8. An actuator according to any one of Claims 1 to 7, in which the second sensor comprises an element sensitive to a magnetic field, with an analogue output.

9. An actuator according to any one of Claims 1 to 8, in which the second sensor comprises an anisotropic magnetoresistor.

10. An actuator according to any one of Claims 1 to 9, in which the second sensor comprises a sensitive element with an analogue output of optical, inductive or capacitive type.

11. An actuator according to any one of Claims 1 to 10, in which the second position sensor comprises a sensitive element (28) with an analogue output and also at least one sensitive element (26, 27) with a digital output which can supply a pulse (61, 62) corresponding to a given point of the stroke (49) of the actuator, in particular a point close to one of the two ends of the stroke of the actuator.

## Patentansprüche

1. Stellantrieb (9) mit einem elektrischen Drehmotor, einer Schraube (14), die durch das Drehen des Motors in eine Drehbewegung versetzt wird, einem mechanischen Organ (15), welches so angeordnet ist, dass es durch die Drehung der Schraube in eine Translationsbewegung versetzt wird, einem ersten Positionsdetektor (40), der auf mindestens einer Position des elektrischen Drehmotors und/oder der Schraube reagiert, einem zweiten Positionsdetektor (41), der auf mindestens einer Position des mechanischen Organs reagiert und mit einem Steuerschaltkreis (11), der mit den beiden Positionsdetektoren und dem Motor verbunden ist, wobei dieser Schaltkreis ein Stromversorgungssignal des Motors liefert, welches in Abhängigkeit von einem Einstellsignal (23) der Position variiert, welches an den Steuerungsschaltkreis angelegt ist und in Funktion von den Signalen, die von den beiden Positionsdetektoren geliefert werden,
**dadurch gekennzeichnet, dass** der zweite Positionsdetektor eine höhere Auflösung als die Auflösung des ersten Positionsdetektors aufweist, derart, dass die beiden Detektoren ein redundantes System bilden und dadurch, dass der Steuerungsschaltkreis redundante Module (19, 22) zur Berechnung der Position des mechanischen Organs in Abhängigkeit von den Signalen/gelieferten Daten von den beiden Detektoren berechnet, und dadurch, dass der Steuerungsschaltkreis Module (17, 18) zur gegenseitigen Überwachung der von den Berechnungsmodulen gelieferten Ergebnisse aufweist.

2. Stellantrieb nach Anspruch 1, bei dem die Auflösung des Messsystems, zum Beispiel des zweiten Positionsdetektors zur Erfassung der Position des mechanischen "Ausgangs"-Organs des Stellantriebs ungefähr doppelt so groß ist wie die des Messsystems zur Bestimmung der Position des Rotors des Motors, das heißt des ersten Detektors, ist.

3. Stellantrieb nach Anspruch 1 oder 2, bei dem mindestens einer der ersten und zweiten Detektoren mehrere sensible Messelemente (24 bis 28) aufweist.

4. Stellantrieb nach einem der Ansprüche 1 bis 3, bei dem der erste Detektor (40) mehrere sensible Elemente (24, 25) aufweist, die jeweils ein digitales Signal liefern, während der zweite Detektor (41) ein sensibles Element (28) aufweist, welches ein analoges Signal abgibt, wobei der Steuerschaltkreis mindestens zwei Analog/Digital-Wandler (20, 21) aufweist, wobei jeder Wandler mit seinem Eingang an dem Ausgang des analogen sensiblen Elements und mit seinem Ausgang an den Modulen zur Berechnung der Position angeschlossen ist.

5. Stellantrieb nach einem der Ansprüche 1 bis 4, bei dem der zweite Detektor ein kontaktloses Potentiometer aufweist.

6. Stellantrieb nach einem der Ansprüche 1 bis 5, bei dem der zweite Detektor ein Potentiometer mit zwei Substraten aufweist, von denen mindestens eines verformbar ist, wobei die Substrate sich gegenüberliegend angeordnet und durch eine Schicht eines elektrisch isolierenden Fluids, wie beispielsweise Luft, getrennt sind, und die sich gegenüberliegenden Flächen der beiden Substrate mindestens eine elektrisch leitende Beschichtung aufweisen.

7. Stellantrieb nach einem der Ansprüche 1 bis 6, bei dem ein Organ (30) zur Temperaturkompensation in den Stellantrieb integriert ist, um eine Temperaturabweichung eines sensiblen Elements auszugleichen.

8. Stellantrieb nach einem der Ansprüche 1 bis 7, bei dem der zweite Detektor ein Element, welches gegenüber einem Magnetfeld empfindlich ist mit analogem Ausgang aufweist.

9. Stellantrieb nach einem der Ansprüche 1 bis 8, bei dem der zweite Detektor einen anisotropen Magnetwiderstand aufweist.

10. Stellantrieb nach einem der Ansprüche 1 bis 9, bei dem der zweite Detektor ein sensibles Element mit analogem Ausgang vom Typ optisches Element, induktives Element oder kapazitives Element aufweist.

11. Stellantrieb nach einem der Ansprüche 1 bis 10, bei dem der zweite Positionsdetektor ein empfindliches Element (28) mit analogem Ausgang sowie mindestens ein sensibles Element (26, 27) mit digitalem Ausgang aufweist, die ein Pulssignal (61, 62) liefern können, welches eine vorbestimmte Stelle des Weges (49) des Stellantriebs entspricht, insbesondere einer Stelle in der Nähe einer der beiden Endstellungen des Weges des Stellantriebs.
